(19) Europäisches Patentamt

European Patent Office

Office européen des brevets

(11) Veröffentlichungsnummer: **0 413 912 B1**

(12) **EUROPÄISCHE PATENTSCHRIFT**

(45) Veröffentlichungstag der Patentschrift: **06.04.94**

(21) Anmeldenummer: **90110966.0**

(22) Anmeldetag: **09.06.90**

(51) Int. Cl.⁵: **C08L  23/08**, C08L 51/06,
C08L 101/00, C08L 21/00

(54) **Ein-oder mehrschichtige Kunststoffolie, Verfahren zu deren Herstellung und Verwendung derselben.**

(30) Priorität: **23.08.89 DE 3927720**

(43) Veröffentlichungstag der Anmeldung:
**27.02.91 Patentblatt  91/09**

(45) Bekanntmachung des Hinweises auf die
Patenterteilung:
**06.04.94 Patentblatt  94/14**

(84) Benannte Vertragsstaaten:
**AT BE CH DE DK ES FR GB GR IT LI LU NL SE**

(56) Entgegenhaltungen:
**EP-A- 0 228 916**
**FR-A- 2 311 805**
**GB-A- 2 210 047**

(73) Patentinhaber: **ALKOR GMBH KUNSTSTOFFE**
**Postfach 71 01 09,**
**Morgensternstrasse 9**
**D-81451 München(DE)**

(72) Erfinder: **Fink, Roland**
**Dinardstrasse 6b**
**D-8130 Starnberg(DE)**
Erfinder: **Heitz, Heinrich, Dr.**
**Jägerweg 11**
**D-8034 Germering(DE)**
Erfinder: **Huber-Hesselberger, Josef**
**Behringstrasse 113**
**D-8000 München 50(DE)**

(74) Vertreter: **Seiler, Siegfried**
**Langhansstrasse 6**
**Postfach 11 02 70**
**D-42662 Solingen (DE)**

EP 0 413 912 B1

Rank Xerox (UK) Business Services
(3.10/3.09/3.3.3)

EP 0 413 912 B1

**Beschreibung**

Die vorliegende Erfindung betrifft eine ein- oder mehrschichtige Kunststoffolie oder Kunststoffolienbahn enthaltend Polyolefine oder Polyolefinmischungen sowie ggf. Verarbeitungshilfs- und Zusatzmittel in mindestens einer Schicht, ein Verfahren zu deren Herstellung und Verwendung derselben. Die Kunststoffolie oder Kunststoffolienbahn enthält mindestens eine Schicht oder Folie oder besteht daraus, die gemäß der Erfindung bestimmte Gewichtsmengen mindestens eines elastischen reaktive Gruppen enthaltenden Polymeren in Kombination mit mindestens einem reaktive Gruppen enthaltenden Polyolefin unter Einhaltung bestimmten E-Modul-Bereiches enthält.

Aus der FR-A-2 311 805 sind bereits Stoffgemische bekannt, die a) 80 bis 99,8 Gew.-% eines Copolyesters enthalten, der im wesentlichen aus wiederkehrenden intralinearen langkettigen Estereinheiten und kurzkettigen Estereinheiten mit regelloser Kopf-Schwanz-Verknüpfung dieser Esterbindung besteht, wobei die langkettigen Estereinheiten eine bestimmte Formel und die kurzkettigen Estereinheiten ebenfalls eine bestimmte Formel aufweisen mit definierten Molekulargewichten, wobei a) mit b) in Gewichtsmengen von 0,2 bis 20 Gew.-% eines Ethyleneinheiten und Carbonsäure aufweisende Einheiten enthaltenden Copolymerisates, das etwa 25 bis 98,5 Gew.-% Ethyleneinheiten und etwa 1,5 bis 30 Gew.-% Carbonsäure enthaltende Einheiten enthält, verwendet wird. Dabei ist die Carbonsäure entweder mit Metallionen neutralisiert oder das Gemisch enthält wenigstens ein lineares Polycarbodiimid und die Schmelze des Gemisches hat mindestens eine Spannung von wenigstens 0,4 g.

Die gemäß FR-A-2 311 805 hergestellten Kunststoffolien im Blasverfahren weisen eine gewisse Steifigkeit nach der Herstellung auf. Gewisse Orientierungen sind eingefroren. Die Orientierungen sind nachteilig bei einer nachfolgenden Thermoverformung. Die Prägestabilität der Mischungen für die Herstellung genarbter Folien (gemäß FR-A-2 311 805) ist verbesserungsbedürftig.

Aus EP-B-0 116 783 ist bereits ein thermoplastisches Elastomergemisch bekannt, das aus a) 20 bis 65 Gew.-% isotaktischem Polypropylen oder Polypropylenreaktorcopolymer mit 1 bis 20 Gew.-% eines alpha-Olefin-Comonomeren oder Mischungen davon, b) 20 bis 60 Gew.-% einer Elastomerkomponente mit Isobutylengerüst und c) 7 bis 40 Gew.-% einer Copolymerkomponente von Ethylen und einem ungesättigten Ester einer niederen Carbonsäure besteht (das bedeutet somit, daß die Carbonsäuregruppe der Komponente c) verestert und somit nicht frei ist). Durch die Mitverwendung der Komponente c) treten Änderungen, insbesondere Erniedrigungen der Schmelzviskosität des Elastomergemisches bei steigender Temperatur auf. Die Verarbeitung des thermoplastischen Elastomergemisches muß daher in einem eingeschränkten Thermoverformungsbereich erfolgen, da sonst die Gefahr ungleicher Wandstärken oder fehlerhafter Formteile, Folien und dgl. bei der Verarbeitung gegeben ist. Durch das Nichtvorhandensein freier Säuregruppen und dgl. treten auch zwischen den Bestandteilen des thermoplastischen Elastomergemisches keine Ionenbindungen oder kovalente Bindungen auf.

Aus EP-B-0 092 318 ist weiterhin ein Verfahren zur Herstellung einer folienbildenden, thermoplastischen elastomeren Blendzusammensetzung bekannt, bei dem man eine Polyolefin-Kunststoffkomponente a) ausgewählt aus Polypropylen, Polypropylenreaktorcopolymer, Polybutylen, linearem Polyethylen mit niedriger Dichte, Polyethylen mit hoher Dichte und Mischungen davon mit einem vorgeformten plastomeren Plastifizierungsblend b), enthaltend 1. ein Copolymer von Ethylen und einem ungesättigten Ester einer Niedrig-Carbonsäure, 2. ein olefinisches Elastomer und 3. ein Kohlenwasserstofföl vermischt. Diese folienbildenden thermoplastischen Mischungen sollen sich durch gute Dispergierbarkeit der Komponenten und günstige Verarbeitungseigenschaften auszeichnen und ergeben Folien mit hoher Flexibilität. Bei diesen thermoplastischen elastomeren Mischungen besteht jedoch die Gefahr, daß infolge der niedrigen Kristallinität, des erweiterten Erweichungsbereiches und der Anwesenheit niedrig molekularer Weichmacher ein Spannungsfließen eintritt. Die unter Verwendung der Kunststofformmasse entsprechend EP-B-0 092 318 hergestellten Kunststoffolienbahnen, Formteile und dgl. weisen zusätzlich jedoch hinsichtlich der Anwesenheit der Kohlenwasserstofföle ungünstige Migrationseigenschaften auf. So sind insbesondere die Fogwerte erheblich verschlechtert. Ebenso ist die Schmelzenviskosität verringert, so daß innerhalb eines bestimmten Thermoverformungsbereiches gearbeitet werden kann um fehlerhafte Folien oder daraus hergestellte Teile zu vermeiden.

Ziel und Aufgabe der vorliegenden Erfindung war es, eine flexible Kunststoffolie oder Kunststoffolinbahn zu finden, die verbesserte Eigenschaften aufweist. So sollte beispielsweise eine verbesserte Alterungsbeständigkeit (Licht- und Wärmealterung) und/oder Thermoformbarkeit und/oder Verbesserung der Schmelzfestigkeit erzielt werden. Weiterhin sollte die Folie oder Folienbahn eine niedrige Emission von flüchtigen Bestandteilen (Fog) besitzen. Es sollte schließlich erreicht werden, daß mit Hilfe der Formmasse auch aus Folien oder Folienbahnen (ein- oder mehrschichtig) Formkörper mit möglichst gleichmäßiger Wandstärke und/oder mit geringen inneren Spannungen hergestellt werden können, insbesondere gegenüber den

2

EP 0 413 912 B1

zugrundeliegenden Polyolefinen.

Erfindungsgemäß wurde festgestellt, daß diesen Zielen und Aufgaben eine ein- oder mehrschichtige Kunststoffolie oder Kunststoffolienbahn enthaltend Polyolefine oder Polyolefinmischungen sowie ggf. Verarbeitungshilfs- und Zusatzmittel in mindestens einer Schicht gerecht wird. Gemäß der Erfindung enthält die Kunststoffolie oder Kunststoffolienbahn mindestens eine Schicht oder Folie oder besteht daraus, die als Polyolefin oder Polyolefinmischung mit reaktiven Gruppen a) 5 bis 80 Gew.-Teile, mindestens eines reaktive Gruppen enthaltenden elastischen Polymeren oder thermoplastischen Elastomeren, das bzw. die aus mindestens einem Carboxyl-, Anhydrid- und/oder Epoxy- Gruppen als reaktive Gruppen enthaltenden Ethylen- Propylen-Mischpolymerisat (EPM), einem reaktive Gruppen enthaltenden oder reaktiv modifizierten Ethylen-Propylen- Dien- Mischpolymerisat (EPDM), reaktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-Blockpolymeren mit Ethylen-Butylen und Ethylen-Propylen, besteht oder bestehen und b) 95 bis 20 Gew.-Teile, mindestens eines reaktive Gruppen enthaltenden Polyolefins oder polyolefinhaltigen Ionomeren, vorzugsweise mindestens eines reaktive Gruppen enthaltenden Olefinco-, -ter- und/oder -pfropfpolymerisates und/oder eines Ionomeren enthaltend oder auf der Basis eines Olefinhomo-, -co-, -ter- und/oder -pfropfpolymerisates, enthält oder daraus besteht, wobei als reaktive Gruppen Carboxyl-, Hydroxyl-, Anhydrid-, und/oder Epoxy- Gruppen gelten, und der Gewichtsanteil an reaktiven Gruppen 0,2 bis 30 Gew.-%, bezogen auf das oder die reaktive Gruppen enthaltend(en) elastisch(en) Polymer(en) (berechnet mit 100 Gew.-Teilen oder reaktive Gruppen enthaltend(en) thermoplastisch(en) Elastomer(en) oder Polyolefinmischungen gemäß a) und/oder 0,2 bis 30 Gew.-%, bezogen auf das oder die reaktive Gruppen enthaltende(n) Polyolefin(e) oder polyolefinhaltige(n) Ionomere(n) (gemäß b), beträgt, wobei der 2-%-E-Modul der Mischung von a) und b) oder der 2-%-E-Modul der daraus thermogeformten Kunststoffolie oder Kunststoffolienbahn oder der Schicht (bei mehrschichtigen Kunststoffolien) zwischen 50 bis 600 N/mm$^2$, liegt.

Die reaktiven Gruppen des reaktive Gruppen enthaltenden Polyolefins und/oder des zusätzlich reaktive Gruppen enthaltenden elastischen Polymers oder thermoplastischen Elastomeren sind somit Carboxyl-, Hydroxyl-, Anhydrid-, Amin-, Amid-, Isocyanat-, Epoxy- und/oder Nitril-Gruppen. Der Gewichtsanteil an reaktiven Gruppen beträgt vorzugsweise 0,3 bis 25 Gew.-%, bezogen auf das oder die reaktive Gruppen enthaltenden elastischen Polymeren (berechnet mit 100 Gew.-Teilen) oder reaktive Gruppen enthaltenden thermoplastischen Elastomeren oder Polymermischungen gemäß a) und 0,2 bis 25 Gew.-%, vorzugsweise 0,5 bis 20 Gew.-%, bezogen auf das oder die reaktive Gruppen enthaltende(n) Polyolefin(e) oder polyolefinhaltige(n) Ionomere(n) (gemäß b).

Das oder die elastischen reaktive Gruppen enthaltende(n) Polymere(n) und/oder thermoplastische(n) Elastomere(n) ist bzw. sind ganz oder teilweise mit dem reaktiven Polyolefin verbunden, wobei die Bindung ganz oder teilweise durch covalente Bindung und/oder Ionenbindungen erfolgt.

Das reaktive Gruppen enthaltende elastische Polymer und/oder thermoplastische Elastomere besteht nach einer Ausführungsform aus Mischungen von verschiedenen reaktiven und nichtreaktiven Polymeren, wobei jedoch der Gesamtgehalt an reaktiven Gruppen der Mischungen 0,2 bis 30 Gew.-%, vorzugsweise 0,3 bis 25 Gew.-% (bezogen auf 100 Gew.-% des reaktive Gruppe enthaltenden Polymergemisches), beträgt.

Nach einer bevorzugten Ausführungsform enthält die Kunststoffolie, insbesondere bei der Herstellung das aus a) und b) bestehende Kunststoffgemisch je 100 Gew.-Teile d) 0,5 bis 30 Gew.-Teile, vorzugsweise 5 bis 25 Gew.-Teile, eines Thermoplasten, ausgenommen jedoch eines freien, reaktive Gruppen enthaltenden Polyolefins oder polyolefinischen Ionomers oder thermoplastischen Elastomeren oder elastischen Polymeren.

Nach einer bevorzugten Ausführungsform enthält die Kunststoffolie je 100 Gew.-Teile von a) und b) oder von a), b) und d) zusätzlich 0,01 bis 6 Gew.-Teile mindestens eines Verarbeitungshilfs- oder Zusatzmittels, vorzugsweise mindestens eines Stabilisators, Antioxidants, UV-Absorbers, Gleitmittels und/oder Antistatikums in einer Schicht oder die Kunststoffolie oder die Kunststoffolienbahn besteht daraus.

Die Kunststofformmasse oder kunststoffhaltige Formmasse zur Herstellung der Monokunststoffolie oder -folienbahn oder mindestens eine Schicht der Kunststoffolie oder -folienbahn oder die Kunststoffolie selbst enthalten nach einer bevorzugten Ausführungsform a) 5 bis 80 Gew.-Teile, vorzugsweise 10 bis 60 Gew.-Teile mindestens eines elastischen reaktive Gruppen enthaltenden Polymeren und/oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-%, vorzugsweise mehr als 75 Gew.-%, (bezogen auf 100 Gew.-Teile des elastomerhaltigen Polymeren oder Polymergemisches), b) 95 bis 20 Gew.-Teile, vorzugsweise 90 bis 40 Gew.-Teile, mindestens eines reaktive Gruppen enthaltenden Polyolefins oder polyolefinhaltigen Ionomeren, vorzugsweise mindestens eines reakti-

3

ve Gruppen enthaltenden Olefinco-, -ter- und/oder -pfropfpolymerisat und/oder eines Ionomeren enthaltend oder auf der Basis eines Polyolefinco-, -ter- und/oder -pfropfpolymerisates, und/oder a), b) und d) 0,5 bis 30 Gew.-Teile, vorzugsweise 5 bis 25 Gew.-Teile, eines Thermoplasten, ausgenommen jedoch eines freie, reaktive Gruppen enthaltenden Polyolefins oder polyolefinischen Ionomers oder thermoplastischen Elastomeren oder elastischen Polymeren, als Kunststoffanteil oder bestehen daraus, wobei das elastische Polymere, Elastomere und/oder elastomerhaltige Polymere oder Polymergemisch (a) einen unterschiedlichen 2-%-E-Modul, vorzugsweise einen um mehr als 10 N/mm$^2$ unterschiedlichen, insbesondere niedrigeren 2-%-E-Modul (gemessen bei 20°C), aufweist als das reaktive Gruppen enthaltende Polyolefin und/oder olefinische Ionomere, und bezogen auf 100 Gew.-Teile a) und b) oder a), b) und d) die Kunststoffolie, Kunststoffbahn oder Schicht der mehrschichtigen Kunststoffolie oder Kunststoffolienbahn zusätzlich 0,01 bis 30 Gew.-Teile, vorzugsweise 0,1 bis 20 Gew.-Teile, mindestens eines Füllstoffes ausgewählt aus der Gruppe der Metalloxide, Metallcarbonate, Metalldioxide, Metallhydrate, Metallhydroxide, Hydrotalcite und/oder Silicate, und/oder eines organischen Füllstoffes ausgewählt aus der Gruppe der feinteiligen Cellulose, Stärke und/oder des feinteiligen Kohlenstoffs, vorzugsweise jedoch Calciumcarbonat, Zinkoxid, Magnesiumoxid, Calciumoxid und/oder Siliciumdioxyd, Talkum, Glimmer oder Wollastonit, 0,01 bis 5 Gew.-Teile, vorzugsweise 0,1 bis 3 Gew.-Teile, mindestens eines Stabilisators, Antioxidants und/oder UV-Absorbers, 0,01 bis 5 Gew.-Teile, vorzugsweise 0,1 bis 3 Gew.-Teile, mindestens eines Farbstoffes und/oder Farbpigmentes, 0 bis 3 Gew.-Teile, vorzugsweise 0,01 bis 2 Gew.-Teile, mindestens eines Gleitmittels und/oder Antistatikums, 0 bis 20 Gew.-Teile, vorzugsweise 1 bis 12 Gew.-Teile, mindestens eines Flammschutzmittels enthält oder daraus besteht.

Das reaktive Gruppen enthaltende Polyolefin (b) besteht nach einer vorzugsweisen Ausführungsform aus einer Mischung oder Legierung und/oder einem Co- oder Pfropfpolymerisat aus einem Olefin, vorzugsweise Ethylen und/oder Propylen, und einer mindestens eine ungesättigte Bindung enthaltende Carbonsäure und/oder dessen Anhydrid, vorzugsweise Acrylsäure, Methacrylsäure, Maleinsäure und/oder Maleinsäureanhydrid, und/oder einem Olefin oder Polyolefin, vorzugsweise Ethylen oder Polyethylen und einer mindestens eine Epoxygruppe enthaltende Verbindung, vorzugsweise Methacrylatglycid oder einem Copolymerisat einer oder mehrerer dieser Verbindungen oder enthält diese.

Nach einer weiteren bevorzugten Ausführungsform besteht oder bestehen das oder die elastische(n) Polymere(n), die reaktive Gruppen oder zusätzliche reaktive Gruppen enthaltende Verbindungen besitzen, aus einem reaktive Gruppen enthaltenden Ethylen-Propylen-Mischpolymerisat (EPM), einem reaktive Gruppen enthaltenden oder reaktiv modifizierten Ethylen-Propylen-Dien-Mischpolymerisat (EPDM), reaktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-Blockpolymeren mit Ethylen-Butylen und Ethylen-Propylen.

Die aus den Bestandteilen a) und b) oder a), b) und d) sowie ggf. Vearbeitungshilfs- und Zusatzmitteln hergestellte Kunststoffolie, Kunststoffolienbahn oder Kunststoffschicht weist im Wärmeverformungsbereich von 10 bis 80 °C oberhalb des Schmelzpunktes des reaktive Gruppen enthaltenden Polyolefins oder Polyolefine enthaltenden Ionomeren eine mehr als 1,5-fache höhere Verformungsspannung oder höheren Verformungswiderstand auf als das reaktive Gruppen enthaltende Polyolefin oder das polyolefinhaltige Basispolymere des Ionomeren, wobei sich diese Spannung innerhalb dieses Bereiches um nicht mehr als den Faktor 10, vorzugsweise um nicht mehr als den Faktor 5, vermindert.

Nach einer bevorzugten Ausführungsform ist die Kunststoffolie oder Kunststoffolienbahn mindestens zweischichtig, bestehend aus einer Basisschicht oder Basisfolie in einer Schicht- oder Foliendicke von 40 μm bis 3.000 μm, vorzugsweise 100 μm bis 1.600μm, enthaltend oder bestehend aus den Kunststoffbestandteilen a) und b) oder a), b) und d) und vorzugsweise Verarbeitungshilfs- und Zusatzmitteln, und mindestens einer Oberflächenschicht oder Oberflächenfolie, die unmittelbar oder über mindestens einer Zwischenschicht oder Zwischenfolie über der Basisschicht oder Basisfolie angeordnet ist und eine Schicht- oder Foliendicke von 1 μm bis 120 μm, vorzugsweise 2 μm bis 80 μm, aufweist.

Nach einer bevorzugten Auführungsform besteht die Kunststoffolie oder Kunststoffolienbahn aus mindestens zwei Basisschichten oder Basisfolien, enthaltend oder bestehend aus den Kunststoffanteilen und/oder Kunststoffmischungen a) und b) oder a), b) und d) in gleichen, vorzugsweise jedoch unterschiedlichen Mischungsverhältnissen, wobei jede der Basisschichten oder Basisfolien eine Dicke von 40 bis 2.500 μm, vorzugsweise 100 bis 1.500 μm, aufweist. Die zwei- oder mehrschichtigen Basisfolien besitzen vorzugsweise zusätzliche eine Oberflächenschicht oder Oberflächenfolie, die eine andere chemische Zusammensetzung aufweist und vorzugsweise durch Beschichtung (Lamination) oder durch Coextrusion aufgebracht ist und/oder eine Haft-, Verbindungs- oder Unterschicht oder Unterfolie anderer chemischer Zusammensetzungen.

Nach einer weiteren bevorzugten Ausführungsform weist die Kunststoffolie oder Kunststoffolienbahn, vorzugsweise mindestens eine Basisschicht oder Basisfolie und/oder eine Oberflächenschicht oder Oberfolie, eine Prägung oder Narbung auf.

Die Oberflächenschicht besteht nach einer vorzugsweisen Ausführungsform aus einem Acrylatharz, Polyurethanharz und/oder Vinylchloridmischpolymerisat oder enthält eines oder mehrerer dieser Polymere, die vorzugsweise in Form einer lösungsmittelhaltigen Beschichtung aufgetragen werden.

Die Erfindung betrifft weiterhin ein Verfahren zur Herstellung der erfindungsgemäßen Kunststoffolie, wobei die Kunststoffmischung für die Kunststoffolie bei Temperaturen zwischen 150 bis 280°C, vorzugsweise 160 bis 250°C, in einer Plastifiziervorrichtung vermischt und im Extrusions-, Coextrusions- oder Kalandrierverfahren oder im Foliengußverfahren zu einer Kunststoffolienbahn oder Kunststoffolie verformt und nachfolgend abgekühlt wird.

Nach einer weiteren bevorzugten Ausführungsform wird die Kunststoffolie oder Kunststoffolienbahn bei Temperaturen von 130 bis 280 °C, vorzugsweise 150 bis 250°C, thermoverformt, geprägt, genarbt und/oder strukturiert.

Nach einer anderen bevorzugten Ausführungsform wird die Kunststoffolie oder Kunststoffolienbahn im schmelzförmigen Zustand oder nach Erhitzung auf Temperaturen über 160 °C nach einer ein- oder beidseitigen Temperierung, vorzugsweise Kühlung, direkt in eine Form mit einer glatten, genarbten oder strukturierten Formoberfläche gesaugt oder gepreßt, vorzugsweise im Positiv- oder Negativtiefziehverfahren verformt, wobei die der Negativtiefziehform zugewandte Folien- oder Schmelzfläche vorzugsweise eine höhere Temperatur aufweist als die der Rückseitenflächen oder beim Postivitiefziehverfahren die der Positivtiefziehform zugewandten Fläche eine niedrigere Temperatur aufweist als die der Gegenfläche, wobei die Kunststoffolien in diesen Thermoformverfahren zu Formteilen, Gegenständen oder Hohlkörpern verformt werden.

Die Erfindung betrifft weiterhin die Verwendung der Kunststoffolie oder Kunststoffolienbahn gemäß der Erfindung zur Herstellung flexibler Formteile, Verkleidungsteile, Dekorationsfolien, Kraftfahrzeugfolien, Kraftfahrzeugverkleidungen und Kraftfahrzeuginnenteile.

Nach einer weiteren bevorzugten Ausführungsform enthält das polyolefinhaltige Ionomere ein Metallkation aus der ersten und/oder zweiten Haupt- und/oder Nebengruppe des Periodensystems, vorzugsweise als Natrium-, Kalium-, Magnesium-, Kalzium- und/oder Zinkion. Nach einer weiteren Ausführungsform sind die im Molekül enthaltenen Säuregruppen zwischen 10 und 80 %, bezogen auf 100% freie Säuregruppen, vorzugsweise 15 bis 75 % neutralisiert oder durch oder unter Verwendung dieser Metallionen vernetzt bzw. vernetzbar.

Die vorliegende Erfindung betrifft weiterhin die Verwendung der Kunststoffolie oder Kunststoffolienbahn unter Mitverwendung mindestens eines Treibmittels oder Treibmittelgemisches bei der Herstellung der Folie für mindestens eine Basisschicht. Die Verbundfolienbahn besteht dabei aus mindestens zwei Basisschichten oder Basisfolien oder enthält diese Basisschichten, von denen mindestens eine Schicht, vorzugsweise die untere Basisschicht oder Basisfolie eine Schaumschicht oder Schaumstruktur aufweist. Die Verbundfolienbahn dient für Innenverkleidungen, Matten, Fußbodenbeläge zur Herstellung von Formteilen oder Formkörpern, Innenverkleidungen von Kraftfahrzeugen oder Kraftfahrzeugteilen, sowie zur Herstellung von Formkörpern, Gegenständen, Hohlkörpern oder Formteilen.

Die erfindungsgemäßen Kunststoffolien oder Kunststoffolienbahnen sowie die daraus hergestellten Formteile, Gegenstände und dgl. sind recyclingfähig, d.h. sie können ganz oder teilweise wiederverwendet werden bzw. als Regenerat eingesetzt werden und beispielsweise auch in der erfindungsgemäßen Kunststoffformmasse für die Kunststoffolie mitverwendet werden.

Als Thermoplast, der 0,5 bis 30 Gew.-Teilen, vorzugsweise 5 bis 25 Gew.-Teilen, (Komponente d) der Formmasse aus a) und b) nach einer Ausführungsform zugesetzt wird, sollten Vinyl-Estergruppen enthaltende Thermoplaste vorzugsweise nicht oder nur bis zu 50 Gew.-% (bezogen auf 100 Gew.-Teile des eingesetzten Thermoplasten), vorzugsweise bis zu 20 Gew.-%, enthalten sein. Bevorzugt werden Styrolhomo-, -co-, und/oder -pfropfpolymerisat eingesetzt.

Nach einer bevorzugten Ausführungsform werden als reaktive Gruppen bei a) und/oder b) Carboxyl-, Hydroxyl-, Amin-, Amid- und/oder Isocyanat-Gruppen eingesetzt.

Bei den Polymeren, die die reaktiven Gruppen enthalten, sollten zusätzliche Vinyl-Estergruppen vorzugsweise nicht oder nur in Gewichtsmengen unter 10 Gew.-%, vorzugsweise unter 3 Gew.-% (bezogen auf 100 Gew.-Teile a) und b) enthalten sein.

Die Kunststoffolie oder Kunststoffolienbahn sowie die daraus hergestellten Gegenstände, thermogeformten Formteile und dgl. weisen eine verbesserte Thermoformbarkeit, verbesserte Licht- und Wärmealterung, sowie eine niedrige Emission für flüchtige Bestandteile (FOG) auf.

5

Bei der Thermoformung von teilkristallinen Polyolefinen ist der Temperaturbereich für eine gleichmäßige Verformung, insbesondere zu komplizierten Formteilen mit hohen und unterschiedlichen Ausziehgraden, zu gering. Deshalb erhält man in der Praxis extreme Wandverdünnungen infolge von Fließerscheinungen. Dieser Mangel tritt besonders bei Folien mit narbenartiger Prägung auf, weil die Prägungstiefen - infolge der lokal höheren Spannung - besonders weit auseinander gezogen werden. Die Ursache hierfür ist die starke Temperaturabhängigkeit der Schmelzenfestigkeit oberhalb des Schmelzpunktes und die Neigung zum Fließen unter Spannung (Spannungsfließen).

Bei Thermoformung unterhalb des Schmelzpunktes der PP- bzw. PE-Matrix entstehen starke innere Spannungen, die zu Rissbildung bei Wärmelagerung führen können. Um diesen Mangel zu vermeiden, wird die Thermoformung mindestens 10 °C oberhalb des Schmelzpunktes des die Matrix bildenden Polyolefins durchgeführt. Die dazu notwendige und über einen großen Temperaturbereich möglichst gleichbleibende Schmelzenfestigkeit erreicht man durch eine starke Bindung, besonders kovalente oder Ionenbindung, der thermoplastischen Elastomeren an die Polyolefinmatrix gemäß der Erfindung.

Die Auswirkung hinsichtlich der Art und Menge der zugesetzten thermoplastischen Elastomeren auf die Verformungskraft wurde an vergleichbaren Probekörpern gemessen. Das Verfahren und die Ergebnisse sind im Beispiel 1 näher erläutert.

Überraschend ist auch die Verbesserung der Wärmealterung, gemessen durch die Dehnungsabnahme, der bei 130 °C 500 Std. gelagerten Proben.

Verbessert sind auch die Fog-Werte gegenüber den bisher für Verkleidungteile eingesetzten ABS/PVC-Mischungen.

Diese Blends und die daraus hergestellten Kunststoffolien zeigen innerhalb der beanspruchten Mischungsverhältnisse verbesserte Festigkeits- und Dehnungseigenschaften sowie bessere Abrieb- bzw. Kratzfestigkeitsverhalten als die Matrixpolymeren. Diese Eigenschaften sind besonders für Teile der KFZ-Innenausstattung wichtig. Ein weiterer Vorteil ist die relativ gute Haftung der Oberflächenlackierung und des Polyurethan-Schaumes an der erfindungsgemäßen Kunststoffolie. Die erfindungsgemäße Folie kann auch Treibmittel enthalten und/oder als Schaumfolie oder Schaumlaminatfolie ausgebildet sein. Weiterhin kann die Folie Flammschutzmittel, Stabilisatoren und andere Zusatzmittel enthalten.

Beispiele

Mischung

Die Rohstoffe wurden bei 60 °C/24 h getrocknet.

Herstellung der Kunststoffolien

Die Mischungen wurden auf einer Einschneckenextrusionsanlage mit Breitschlitzdüsen zu Kunststoffolien oder Basisfolien mit einer Dicke von 0,4 - 0,5 mm verarbeitet. Die Massetemperatur erreichte 220 - 230 °C.

Eigenschaften der eingesetzten Rohstoffe

| Reaktives Elastomer 1 | |
|---|---|
| Chemische Zusammensetzung: | Reaktive Gruppen enthaltendes Styrol-Triblockpolymer, 2 Gew.-% COOH-Gruppen |
| Shore A | 70 - 80 |
| Zugfestigkeit DIN 53455 PK 5 (*) N/mm$^2$ | 20 - 30 |
| Bruchdehnung (*) % | > 450 |
| 2 % - E-Modul DIN 53 57 (**) N/mm$^2$ | 188 in Längsrichtung |
| Dichte g/cm$^3$ | 0,91 |
| Styrolgehalt % | 26 - 30 |

*) Meßlänge 100 mm, Einspannlänge 120 mm, v = 100 mm/min
** v = 5 mm/min

| Teilweise neutralisiertes PO-Copolymerisat | |
|---|---|
| Chemische Zusammensetzung: | Ethylen-Methacrylsäure-Copolymer (90:10), zu 70 Gew.-% neutralisiert |
| Shore D | 58 - 62 |
| Zugfestigkeit (*) N/mm$^2$ | 25 - 30 |
| Bruchdehnung (*) % | > 350 |
| 2 % - E-Modul (**) N/mm$^2$ | 222 |
| Dichte g/cm$^3$ | 0,95 |

*) Meßlänge 100 mm, Einspannlänge 120 mm, v = 100 mm/min

** v = 5 mm/min

| Reaktives Elastomer 2 | |
|---|---|
| Chemische Zusammensetzung: Shore D | TPU (Polyether-Polyurethan) 43 |
| Zugfestigkeit DIN 52910 N/mm$^2$ (v = 100 mm/min) | längs 15,4 <br> quer 15,0 |
| Bruchdehnung DIN 52910 % (v = 100 mm/min) | längs 380 <br> quer 400 |
| Dichte g/cm$^3$ | 1,15 |

| Reaktives Polyolefin 1 | |
|---|---|
| Chemische Zusammensetzung: | Polyethylen (Ethylencopolymerisat) mit 9 Gew.-% Acrylsäure als Comonomer |
| MFI (2,16 kg/190 °C) g/10 min | 1,5 |
| Dichte | 0,94 |

| Reaktives Polyolefin 2 | |
|---|---|
| Chemische Zusammensetzung: | Polypropylen mit 6 Gew.-% Acrylsäure gepfropft (Polybond 1001) |
| MFI (2,16 kg/230 °C) g/10 min | 20 |

7

Meßergebnisse

Teilweise neutralisiertes PO-Copolymerisat
<u>oder Ionomer/Reaktives Elastomer 1</u>

| Mischungsverhältnis | | | 85/15 | 70/30 | 55/45 |
|---|---|---|---|---|---|
| Foliendicke | mm | | 0,51-0,53 | 0,45-0,52 | 0,48-0,56 |
| Zugfestigkeit DIN | $N/mm^2$ | l | 27,4 | 28,0 | 27,2 |
| 52910 (b=20 mm; | | q | 24,2 | 24,0 | 21,1 |
| v=1000 mm/min) | | | | | |
| Bruchdehnung | % | | | | |
| Original | | l | 385 | 415 | 437 |
| | | q | 366 | 396 | 395 |
| nach 500 h/130 °C | | l | 254 | 281 | 365 |
| Lagerung mit rück- | | | | | |
| seitiger PUR-Schicht | | | | | |
| Dehnungsabfall | % | l | 34 | 32 | 16 |
| Fogging DIN 75201 R | % | | 97 | 98 | 98 |
| abweichend davon: | | | | | |
| statt 100 °C bei | | | | | |
| 120 °C/3 h gemessen | | | | | |
| Kondensat DIN 75201 G | mg | | < 0,32 | < 0,50 | < 0,43 |
| Verformungskraft *** | | | | | |
| beim Thermoformen | °C - kg | | 130 - 5,5 | 130 - 7,8 | 130 - 12,2 |
| | | | 160 - 2,8 | 160 - 4,5 | 160 - 7,4 |
| | | | 174 - 2,0 | 174 - 3,7 | 174 - 6,0 |

Teilweise neutralisiertes PO-Copolymerisat
<u>oder Ionomer /Reaktives Elastomer 1</u>

| Mischungsverhältnis | | | | 70/30 |
|---|---|---|---|---|
| Foliendicke | mm | | 0,41-0,51 | |
| Zugfestigkeit | $N/,mm^2$ | l | | 24 |
| DIN 52910 | | q | 13 | |
| (b=20 mm;) | | | | |
| v=1000 mm/min) | | | | |

8

EP 0 413 912 B1

Bruchdehnung        %
Original               l   392
                       q   280
nach 500 h/130 °C      l   278
Lagerung mit rückseitiger PUR-Schicht
Dehnungsabfall   %     l   29

|  |  | Reakt.PO1/ reakt.Elast1 | Reakt.PO1/ reakt.Elast.2 |
|---|---|---|---|
| Mischungsverhältnis |  | 70/30 | 70/30 |
| Foliendicke | mm | 0,53-0,56 | 0,48-0,50 |
| Zugfestigkeit DIN 52910 | N/mm$^2$  l | 34 | 27 |
| (b=20 mm; v=1000 mm/min) | q | 25 | 18 |
| Bruchdehnung | % |  |  |
| Original | l | 560 | 515 |
|  | q | 490 | 450 |
| nach 500 h/130 °C Lagerung mit rückseitiger PUR-Schicht | l | 290 | 246 |
| Dehnungsabfall | % l | 48 | 52 |
| Fogging DIN 75201 R | % | 87/91 | - |
| abweichend davon: statt 100 °C bei 120 ° C/3h |  |  |  |
| Kondensat DIN 75201 G | mg | < 1,5 | - |
| bei 120 ° C/16 h gemessen |  |  |  |
| Verformungskraft (***) beim Thermoformen | °C - kg | 137 - 5 (gerissen) 176 - 2 | 146 - 4,5 (gerissen) 187 - 2,0 |

Reaktives Polyolefin 2 /reaktives Polyolefin 1

| Mischungsverhältnis |  |  | 70/30 |
|---|---|---|---|
| Foliendicke | mm |  | 0,45-0,47 |
| Zugfestigkeit | N/,mm$^2$ | l | 29 |
| DIN 52910 |  | q | 27 |

9

EP 0 413 912 B1

```
(b=20 mm;)
v=1000mm/min)
Bruchdehnung          %
Original                    1        560
                            q        490
nach 500 h/130 °C           1        260
Lagerung mit rück-
seitiger PUR-Schicht
Dehnungsabfall       %      1        53
Fogging DIN 75201 R %                91/95
abweichend davon:
statt 100 °C bei
120 °C/3h
Kondensat DIN 75201 G    mg              < 1,6
bei 120 °C/16 h gemessen
```

***) Messung der Verformungskraft (siehe auch deutsches Gebrauchsmuster 8900031.5 vom 3.1.89):

Eine kreisrunde, eingespannte Folienfläche mit einem Durchmesser von 220 mm wird durch IR-Strahler auf die jeweilige Verformungstemperatur gebracht. Ein mittig auftreffender Stempel mit einem Durchmesser von 170 mm verformt die Folie im verbleibenden Kreisring von 50 mm um ca. 600 % und mißt die dabei auftretende Kraft. Es ist darauf zu achten, daß keine Folie aus dem Tellerbereich nachfließt.

Die Verformungshöhe ist 165 mm und wird innerhalb von 2 sec erreicht.

**Patentansprüche**

1. Ein- oder mehrschichtige Kunststoffolie oder Kunststoffolienbahn enthaltend Polyolefin oder Polyolefinmischungen mit reaktiven Gruppen sowie ggf. Verarbeitungshilfs- und Zusatzmittel in mindestens einer Schicht, dadurch gekennzeichnet, daß die Kunststoffolie oder Kunststoffolienbahn mindestens eine Schicht oder Folie enthält oder daraus besteht, die als Polyolefine oder Polyolefinmischungen mit reaktiven Gruppen

   a) 5 bis 80 Gew.-Teile,
   mindestens eines reaktive Gruppen enthaltenden elastischen Polymeren oder thermoplastischen Elastomeren, das bzw. die aus mindestens einem Carboxyl-, Anhydrid- und/oder Epoxy- Gruppen als reaktive Gruppen enthaltenden Ethylen-Propylen- Mischpolymerisat (EPM), einem reaktive Gruppen enthaltenden oder reaktiv modifizierten Ethylen- Propylen- Dien- Mischpolymerisat (EPDM), reaktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-

10

Blockpolymeren mit Ethylen-Butylen und Ethylen-Propylen, besteht oder bestehen und
b) 95 bis 20 Gew.-Teile,
mindestens eines reaktive Gruppen enthaltenden Polyolefins oder polyolefinhaltigen Ionomeren, vorzugsweise mindestens eines reaktive Gruppen enthaltenden Olefinco-, -ter- und/oder -pfropfpolymerisates und/oder eines Ionomeren enthaltend oder auf der Basis eines Olefinhomo-, -co-, -ter- und/oder -pfropfpolymerisates, enthält oder daraus besteht, wobei als reaktive Gruppen Carboxyl-, Hydroxyl-, Anhydrid-, und/oder Epoxy- Gruppen gelten, und der Gewichtsanteil an reaktiven Gruppen
0,2 bis 30 Gew.-%,
bezogen auf das oder die reaktive Gruppen enthaltend(en) elastisch(en) Polymer(en) (berechnet mit 100 Gew.-Teilen oder reaktive Gruppen enthaltend(en) thermoplastisch(en) Elastomer(en) oder Polyolefinmischungen gemäß a) und/oder
0,2 bis 30 Gew.-%,
bezogen auf das oder die reaktive Gruppen enthaltende(n) Polyolefin(e) oder polyolefinhaltige(n) Ionomere(n) (gemäß b), beträgt,wobei der 2-%-E-Modul der Mischung von a) und b) oder der 2-%-E-Modul der daraus thermogeformten Kunststoffolie oder Kunststoffolienbahn oder der Schicht (bei mehrschichtigen Kunststoffolien) zwischen 50 bis 600 N/mm$^2$, liegt.

2. Kunststoffolie nach Anspruch 1, dadurch gekennzeichnet, daß die Kunststoffolie oder Kunststoffolienbahn als Polymerisatgemische mit reaktiven Gruppen
10 bis 60 gew.-Teile a)
und
90 bis 40 Gew.-Teile b)
enthält oder daraus besteht, wobei der Gewichtsanteil an reaktiven Gruppen,
0,3 bis 25 Gew.-%,
bezogen auf das oder die reaktive Gruppen enthaltend(en) elastisch(en) Polymer(en) (berechnet mit 100 Gew.-Teilen oder reaktive Gruppen enthaltend(en) thermoplastisch(en) Elastomer(en) oder Polymermischungen gemäß a) und/oder
0,3 bis 25 Gew.-%,
bezogen auf das oder die reaktive Gruppen enthaltende(n) Polyolefin(e) oder polyolefinhaltige(n) Ionomere(n) (gemäß b), beträgt wobei der 2-%-E-Modul der Mischung von a) und b) oder der 2-%-E-Modul der daraus thermogeformten Kunststoffolie oder Kunststoffolienbahn oder der Schicht (bei mehrschichtigen Kunststoffolien) zwischen 70 bis 550 N/mm$^2$, liegt.

3. Kunststoffolie nach einem oder mehreren der Ansprüche 1 und 2, dadurch gekennzeichnet, daß in der Kunststoffolie das oder die elastischen reaktive Gruppen enthaltende(n) Polymere(n) und/oder thermoplastische(n) Elastomere(n) mit dem reaktiven Polyolefin durch covalente und/oder Ionenbindungen verbunden sind.

4. Kunststoffolie nach einem oder mehreren der Ansprüche 1 bis 3, dadurch gekennzeichnet, daß das reaktive Gruppen enthaltende elastische Polymer und/oder thermoplastische Elastomere aus Mischungen von verschiedenen reaktiven und nichtreaktiven Polymeren besteht, wobei jedoch der Gesamtgehalt an reaktiven Gruppen der Mischungen
0,2 bis 30 Gew.-%, vorzugsweise
0,3 bis 25 Gew.-%
(bezogen auf 100 Gew.-% des reaktive Gruppen enthaltenden elastischen Polymergemisches), beträgt.

5. Kunststoffolie nach einem oder mehreren der Ansprüche 1 bis 4, dadurch gekennzeichnet, daß das reaktive Gruppen enthaltende elastische Polymere oder thermoplastische reaktive Gruppen enthaltende Elastomere und/oder elastomerhaltige Polymere oder Polymergemisch (a) einen gegenüber (b) unterschiedlichen 2-%-E-Modul, vorzugsweise einen um mehr als 10 N/mm$^2$ unterschiedlichen 2-%-E-Modul (gemessen bei 20°C), aufweist als das reaktive Gruppen enthaltende Polyolefin und/oder olefinische Ionomere.

6. Kunststoffolie nach einem oder mehreren der Ansprüche 1 bis 5, dadurch gekennzeichnet, daß das aus a) und b) bestehende Kunststoffgemisch je 100 Gew.-Teile
d) 0,5 bis 30 Gew.-Teile, vorzugsweise
5 bis 25 Gew.-Teile,

eines Thermoplasten, ausgenommen jedoch eines freien, reaktive Gruppen enthaltenden Polyolefins oder polyolefinischen Ionomers oder thermoplastischen Elastomeren oder elastischen Polymeren, enthält.

7. Kunststoffolie nach einem oder mehreren der Ansprüche 1 bis 6, dadurch gekennzeichnet, daß je 100 Gew.-Teile von a) und b) oder von a), b) und d) die Kunststoffolie oder Kunststoffolienbahn zusätzlich 0,01 bis 6 Gew.-Teile mindestens eines Verarbeitungshilfs- oder Zusatzmittels, vorzugsweise mindestens eines Stabilisators, Antioxidants, UV-Absorbers, Gleitmittels und/oder Antistatikums in einer Schicht enthält oder die Kunststoffolie oder die Kunststoffolienbahn daraus besteht.

8. Kunststoffolie nach einem oder mehreren der Ansprüche 1 bis 7, dadurch gekennzeichnet, daß die Kunststofformmasse oder kunststoffhaltige Formmasse der Kunststoffmonofolie oder -folienbahn oder mindestens eine Schicht der Kunststoffolie oder -folienbahn aus

a) 5 bis 80 Gew.-Teilen, vorzugsweise

10 bis 60 Gew.-Teilen,

mindestens eines elastischen reaktive Gruppen enthaltenden Polymeren und/oder mindestens eines thermoplastischen reaktive Gruppen enthaltenden Elastomeren oder eines reaktive Gruppen enthaltenden Polymeren oder Polymergemisches mit einem Anteil an elastischen Polymeren von

mehr als 60 Gew.-%, vorzugsweise

mehr als 75 Gew.-%,

(bezogen auf 100 Gew.-Teile des elastomerhaltigen Polymeren oder Polymergemisches),

b) 95 bis 20 Gew.-Teilen, vorzugsweise

90 bis 40 Gew.-Teilen,

mindestens eines reaktive Gruppen enthaltenden Polyolefins oder polyolefinhaltigen Ionomeren, vorzugsweise mindestens eines reaktive Gruppen enthaltenden Olefinco-, -ter- und/oder -pfropfpolymerisat und/oder eines Ionomeren enthaltend oder auf der Basis eines Olefinco-, -ter- und/oder -pfropfpolymerisates,

und/oder a), b) und d)

0,5 bis 30 Gew.-Teilen, vorzugsweise

5 bis 25 Gew.-Teilen,

eines Thermoplasten, (ausgenommen jedoch eines freie, reaktive Gruppen enthaltenden Polyolefins oder polyolefinischen Ionomers oder thermoplastischen Elastomeren oder elastischen Polymeren), als Kunststoffanteil besteht, wobei das elastische Polymere, Elastomere und/oder elastomerhaltige Polymere oder Polymergemisch (a) einen unterschiedlichen 2-%-E-Modul, vorzugsweise einen um mehr als 10 $N/mm^2$ unterschiedlichen oder niedrigeren 2-%-E-Modul (gemessen bei 20 °C), aufweist als das reaktive Gruppen enthaltende Polyolefin und/oder olefinische Ionomere, und bezogen auf 100 Gew.-Teile a) und b) oder a), b) und d) die Kunststoffolie, Kunststoffbahn oder Schicht der mehrschichtigen Kunststoffolie oder Kunststofffolienbahn zusätzlich

0,01 bis 30 Gew.-Teile, vorzugsweise

0,1 bis 20 Gew.-Teile,

mindestens eines Füllstoffes ausgewählt aus der Gruppe der Metalloxide, Metallcarbonate, Metalldioxyde, Metallhydrate, Metallhydroxide, Hydrotalcite und/oder Silicate, und/oder eines organischen Füllstoffes ausgewählt aus der Gruppe der feinteiligen Cellulose, Stärke und/oder feinteiligen Kohlenstoffs, vorzugsweise jedoch Calciumcarbonat, Zinkoxid, Magnesiumoxid, Calciumoxid und/oder Siliciumdioxid, Talkum, Glimmer oder Wollastonit,

0,01 bis 5 Gew.-Teile, vorzugsweise

0,1 bis 3 Gew.-Teile,

mindestens eines Stabilisators, Antioxidants und/oder UV-Absorbers,

0,01 bis 5 Gew.-Teile, vorzugsweise

0,1 bis 3 Gew.-Teile,

mindestens eines Farbstoffes und/oder Farbpigmentes,

0 bis 3 Gew.-Teile, vorzugsweise

0,01 bis 2 Gew.-Teile,

mindestens eines Gleitmittels und/oder Antistatikums,

0 bis 30 Gew.-Teile, vorzugsweise

1 bis 20 Gew.-Teile,

mindestens eines Flammschutzmittels,

0 bis 12 Gew.-Teile, vorzugsweise

0,1 bis 10 Gew.-Teile,
mindestens eines chemischen und/oder physikalischen Treibmittels enthält oder daraus besteht.

9. Kunststoffolie nach einem oder mehreren der Anprüche 1 bis 8, dadurch gekennzeichnet, daß das reaktive Gruppen enthaltende Polyolefin (b) aus einer Mischung oder Legierung und/oder einem Co- oder Pfropfpolymerisat aus einem Olefin, vorzugsweise Ethylen und/oder Propylen, und einer mindestens eine ungesättigte Bindung enthaltende Carbonsäure und/oder dessen Anhydrid, vorzugsweise Acrylsäure, Methacrylsäure, Maleinsäure und/oder Maleinsäureanhydrid, und/oder einem Olefin oder Polyolefin, vorzugsweise Ethylen oder Polyethylen, und einer mindestens eine Epoxygruppe enthaltende Verbindung, vorzugsweise Methacrylatglycid, oder einem Copolymerisat einer oder mehrerer dieser Verbindungen besteht oder diese enthält.

10. Kunststoffolie nach einem oder mehreren der Ansprüche 1 bis 9, dadurch gekennzeichnet, daß das oder die elastische(n) Polymere(n), die aus mindestens einem reaktive Gruppen enthaltende Ethylen-Propylen-Mischpolymerisat (EPM), einem reaktive Gruppen enthaltenden oder reaktiv modifizierten Ethylen-Propylen-Dien-Mischpolymerisat (EPDM), reaktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-Blockpolymeren mit Ethylen-Butylen und Ethylen-Propylen, bestehen.

11. Kunststoffolie nach einem oder mehreren der Ansprüche 1 bis 10, dadurch gekennzeichnet, daß die aus den Bestandteilen a) und b) oder a), b) und d) sowie ggf. Verarbeitungshilfs- und Zusatzmitteln hergestellte Kunststoffolie, Kunststoffolienbahn oder Kunststoffschicht im Wärmeverformungsbereich von 10 bis 80 °C oberhalb des Schmelzpunktes des reaktive Gruppen enthaltenden Polyolefins oder des polyolefinhaltigen Basispolymeren des Ionomers eine mehr als 1,5-fache höhere Verformungsspannung oder höheren Verformungswiderstand aufweist als das reaktive Gruppe enthaltende Polyolefin oder das polyolefinhaltige Basispolymere des Ionomers, wobei sich diese Spannung innerhalb dieses Verformungsbereiches um nicht mehr als den Faktor 10, vorzugsweise um nicht mehr als den Faktor 4, vermindert.

12. Kunststoffolie nach einem oder mehreren der Ansprüche 1 bis 11, dadurch gekennzeichnet, daß die Kunststoffolie oder Kunststoffolienbahn mindestens zweischichtig ist, bestehend aus einer Basisschicht oder Basisfolie in einer Schicht- oder Foliendicke von
40 $\mu$m bis 3.000 $\mu$m, vorzugsweise
100 $\mu$m bis 1.600 $\mu$m,
enthaltend oder bestehend aus den Kunststoffbestandteilen a) und b) oder a), b) und d) und vorzugsweise Verarbeitungshilfs- und Zusatzmitteln, und mindestens einer Oberflächenschicht oder Oberflächenfolie, die unmittelbar oder über mindestens eine Zwischenschicht oder Zwischenfolie über der Basisschicht oder Basisfolie angeordnet ist und eine Schicht- oder Foliendicke von
1 $\mu$m bis 120 $\mu$m, vorzugsweise
2 $\mu$m bis 80 $\mu$m,
aufweist.

13. Kunststoffolie nach einem oder mehreren der Ansprüche 1 bis 12, dadurch gekennzeichnet, daß die Kunststoffolie oder Kunststoffolienbahn aus mindestens zwei Basisschichten oder Basisfolien besteht, enthaltend oder bestehend aus den Kunststoffanteilen und/oder Kunststoffmischungen a) und b) oder a), b) und d) in gleichen, vorzugsweise jedoch unterschiedlichen Mischungsverhältnissen und/oder gleichen oder unterschiedlichen Molekulargewichten der in den einzelnen Basisschichten oder Basisfolien eingesetzten Polymeren oder Elastomeren, daß jede der Basisschichten oder Basisfolien eine Dicke von
40 bis 2.500 $\mu$m, vorzugsweise
100 bis 1.500 $\mu$m,
aufweist und die zwei- oder mehrschichtigen Basisfolien vorzugsweise zusätzlich mit einer Oberflächenschicht oder Oberflächenfolie mit einer anderen chemischen Zusammensetzung beschichtet oder verbunden sind und/oder eine Haft-, Verbindungs- oder Unterschicht oder Unterfolie anderer chemischer Zusammensetzungen besitzen.

**14.** Kunststoffolie nach einem oder mehreren der Ansprüche 1 bis 13, dadurch gekennzeichnet, daß die Kunststoffolie oder Kunststoffolienbahn, vorzugsweise mindestens eine Basisschicht oder Basisfolie und/oder eine Oberflächenschicht oder Oberfolie, eine Prägung oder Narbung aufweist.

**15.** Kunststoffolie nach einem oder mehreren der Ansprüche 1 bis 14, dadurch gekennzeichnet, daß die Oberflächenschicht ein Acrylatharz oder Polyurethanharz und/oder Vinylchloridmischpolymerisat enthält oder daraus besteht, vorzugsweise aufgetragen in Form einer lösungsmittelhaltigen Beschichtung.

**16.** Kunststoffolie nach einem oder mehreren der Ansprüche 1 bis 15, dadurch gekennzeichnet, daß das reaktive Gruppen enthaltende elastische Polymere oder thermoplastische reaktive Gruppen enthaltende Elastomere und/oder elastomerhaltige Polymere oder Polymergemisch (a) einen niedrigeren 2-%-E-Modul, vorzugsweise einen um mehr als 10 N/mm$^2$ niedrigeren 2-%-E-Modul (gemessen bei 20°C), aufweist als das reaktive Gruppen enthaltende Polyolefin und/oder olefinische Ionomere.

**17.** Verfahren zur Herstellung der Kunststoffolie nach einem oder mehreren der Ansprüche 1 bis 16, dadurch gekennzeichnet, daß die Kunststoffmischung für die Kunststoffolie bei Temperaturen zwischen
150 bis 280°C, vorzugsweise
160 bis 250°C,
in einer Plastifiziervorrichtung vermischt oder homogenisiert und im Extrusions-, Coextrusions- oder Kalandrierverfahren oder im Foliengußverfahren zu einer Kunststoffolienbahn oder Kunststoffolie verformt und nachfolgend abgekühlt wird.

**18.** Verfahren zur Herstellung der Kunststoffolie nach einem oder mehrere der Ansprüchen 1 bis 17, dadurch gekennzeichnet, daß die Kunststoffolie oder Kunststoffolienbahn bei Temperaturen von
130 bis 280 °C, vorzugsweise
150 bis 250 °C,
thermoverformt, geprägt, genarbt und/oder strukturiert wird.

**19.** Verfahren zur Herstellung der Kunststoffolie nach einem oder mehreren der Ansprüche 1 bis 18, dadurch gekennzeichnet, daß die Kunststoffolie oder Kunststoffolienbahn im schmelzförmigen Zustand oder nach Erhitzung auf Temperaturen über 160 °C nach einer ein- oder beidseitigen Temperierung, vorzugsweise Kühlung, direkt in eine Form mit einer glatten, genarbten oder strukturierten Formoberfläche gesaugt oder gepreßt wird, vorzugsweise im Positiv- oder Negativtiefziehverfahren verformt wird, wobei die der Negativtiefziehform zugewandte Folien- oder Schmelzfläche vorzugsweise eine höhere Temperatur aufweist als die der Rückseitenflächen oder beim Postivtiefziehverfahren die der Positivtiefziehform zugewandten Fläche eine niedrigere Temperatur aufweist als die der Gegenfläche, wobei die Kunststoffolien in diesen Thermoformverfahren zu Formteilen, Gegenständen oder Hohlkörpern verformt werden.

**20.** Verwendung der Kunststoffolie oder Kunststoffolienbahn nach einem oder mehreren der Ansprüche 1 bis 16, zur Herstellung flexibler Formteile, Verkleidungsteile, Dekorationsfolien, Kraftfahrzeugfolien, Kraftfahrzeugverkleidungen und Kraftfahrzeuginnenteilen.

**21.** Verwendung der Kunststoffolie oder Kunststoffolienbahn nach einem oder mehreren der Ansprüche 1 bis 16 für die Verarbeitung im Negativtiefziehverfahren.

**22.** Verwendung der Kunststoffolie oder Kunststoffolienbahn nach einem oder mehreren der Ansprüche 1 bis 16 unter Mitverwendung mindestens eines Treibmittels oder Treibmittelgemisches für mindestens eine Basisschicht, dadurch gekennzeichnet, daß die Verbundfolienbahn aus mindestens zwei Basisschichten oder Basisfolien besteht oder diese Basisschichten enthält, von denen mindestens eine Schicht, vorzugsweise die untere Basisschicht oder Basisfolie eine Schaumschicht oder Schaumstruktur aufweist und die Verbundfolienbahn für Innenverkleidungen, Matten, Fußbodenbeläge zur Herstellung von Formteilen oder Formkörpern, Innenverkleidungen von Kraftfahrzeugen oder Kraftfahrzeugteilen, sowie zur Herstellung von Formkörpern, Hohlkörpern oder Formteilen verwendet wird.

EP 0 413 912 B1

**Claims**

1.  Single- or multi-layer plastic film or plastic film web comprising a polyolefin or polyolefin blends with reactive groups and, if applicable, processing aids and additives in at least one layer, characterised in that the plastic film or plastic film web comprises or consists of at least one layer or film which, as polyolefins or polyolefin blends with reactive groups, comprises or consists of

    a) 5 to 80 parts by weight

    of at least one elastic polymer or thermoplastic elastomer comprising reactive groups, which consist-(s) of at least one carboxyl, anhydride and/or epoxy group as ethylene propylene copolymer (EPM) comprising reactive groups, one ethylene propylene diene copolymer (EPDM) comprising reactive groups or modified by reaction, di-block polymers comprising reactive groups and consisting of styrene with butadiene, with isoprene, with ethylene butylene or with ethylene propylene, preferably of styrene-tri-block polymers, comprising reactive groups, with ethylene butylene and ethylene propylene and

    b) 95 to 20 parts by weight

    of at least one polyolefin or polyolefin-containing ionomer comprising reactive groups, preferably of at least one olefin copolymer, terpolymer and/or block polymer comprising reactive groups and/or of an ionomer comprising or based on an olefin homopolymer, copolymer, terpolymer and/or block polymer, the reactive groups in question being carboxyl, hydroxyl, anhydride and/or epoxy groups, and the proportion by weight of reactive groups being

    0.2 to 30% by weight,

    related to the elastic polymer(s) comprising reactive groups (calculated with 100 parts by weight) or thermoplastic elastomer(s) or polyolefin blends comprising reactive groups according to a) and/or

    0.2 to 30% by weight,

    related to the polyolefin(s) or polyolefin-containing ionomer(s) comprising reactive groups (according to b), with the 2% E-modulus of the blend of a) and b) or the 2% E-modulus of the plastic film or plastic film web formed under heat therefrom or the layer (in the case of multi-layer plastic films) lying between 50 and 600 N/mm$^2$.

2.  Plastic film according to claim 1, characterised in that, as polymer blends with reactive groups, the plastic sheet or plastic film web comprises or consists of

    10 to 60 parts by weight a)

    and

    90 to 40 parts by weight b),

    the proportion by weight of reactive groups being

    0.3 to 25% by weight,

    related to the elastic polymer(s) comprising reactive groups (calculated with 100 parts by weight) or thermoplastic elastomer(s) or polymer blends comprising reactive groups according to a) and/or

    0.3 to 25% by weight,

    related to the polyolefin(s) or polyolefin-containing ionomer(s) comprising reactive groups (according to b), with the 2% E-modulus of the blend of a) and b) or the 2% E-modulus of the plastic film or plastic film web formed under heat therefrom or the layer (in the case of multi-layer plastic films) lying between 70 and 550 N/mm$^2$.

3.  Plastic film according to one or more of claims 1 and 2, characterised in that the elastic polymer(s) and/or thermoplastic elastomer(s) comprising reactive groups is/are bonded to the reactive polyolefin in the plastic film by covalent and/or ionic bonds.

4.  Plastic film according to one or more of claims 1 to 3, characterised in that the elastic polymer and/or thermoplastic elastomer comprising reactive groups consist(s) of blends of different reactive and non-reactive polymers, with, however, the total content of reactive groups of the blends being

    0.2 to 30% by weight, preferably

    0.3 to 25% by weight,

    (related to 100% by weight of the elastic polymer blend comprising reactive groups).

5.  Plastic film according to one or more of claims 1 to 4, characterised in that the elastic polymer comprising reactive groups or thermoplastic elastomer comprising reactive groups and/or elastomer-containing polymer or polymer blend (a) has a 2% E-modulus which is different to that of (b),

15

preferably a 2% E-modulus which differs by more than 10 N/mm² (measured at 20 ° C) from that of the polyolefin and/or olefinic ionomer comprising reactive groups.

6. Plastic film according to one or more of claims 1 to 5, characterised in that the plastic blend consisting of a) and b) comprises, per 100 parts by weight,
    d) 0.5 to 30 parts by weight, preferably
        5 to 25 parts by weight,
of a thermoplastic, excluding, however, a free polyolefin or polyolefinic ionomer or thermoplastic elastomer or elastic polymer comprising reactive groups.

7. Plastic film according to one or more of claims 1 to 6, characterised in that, per 100 parts by weight of a) and b) or of a), b) and d), the plastic film or plastic film web additionally comprises 0.01 to 6 parts by weight of at least one processing aid or additive, preferably at least one stabilizer, antioxidant, ultraviolet absorber, lubricant and/or anti-static agent in one layer, or the plastic film or plastic film web consists thereof.

8. Plastic film according to one or more of claims 1 to 7, characterised in that the plastic moulding material or plastic-containing moulding material of the plastic monofilm or monofilm web or at least one layer of the plastic film or film web consists of
    a) 5 to 80 parts by weight, preferably
        10 to 60 parts by weight,
of at least one elastic polymer comprising reactive groups and/or at least one thermoplastic elastomer comprising reactive groups or a polymer or polymer blend comprising reactive groups and with an elastic polymer proportion of
        more than 60% by weight, preferably
        more than 75% by weight,
(related to 100 parts by weight of the elastomer-containing polymer or polymer blend),
    b) 95 to 20 parts by weight, preferably
        90 to 40 parts by weight,
of at least one polyolefin or polyolefin-containing ionomer comprising reactive groups, preferably at least one olefin copolymer, terpolymer and/or graft polymer comprising reactive groups and/or of an ionomer comprising or based on an olefin copolymer, terpolymer and/or block polymer,
and/or a), b) and d)
        0.5 to 30 parts by weight, preferably
        5 to 25 parts by weight,
of a thermoplastic (excluding, however, a free polyolefin or polyolefinic ionomer or thermoplastic elastomer or elastic polymer comprising reactive groups), as plastic constituent, with the elastic polymer, elastomer and/or elastomer-containing polymer or polymer blend (a) having a different 2% E-modulus, preferably a 2% E-modulus which is different or lower by more than 10 N/mm² (measured at 20 ° C) to/than that of the polyolefin and/or olefinic ionomer comprising reactive groups, and related to 100 parts by weight a) and b) or a), b) and d), the plastic film, plastic web or layer of the multi-layer plastic film or plastic film web additionally comprises or consists of
        0.01 to 30 parts by weight, preferably
        0.1 to 20 parts by weight,
of at least one filler selected from the metal oxides, metal carbonates, metal dioxides, metal hydrates, metal hydroxides, hydrotalcites and/or silicates group, and/or an organic filler selected from the fine cellulose, starch and/or fine carbon group, although preferably calcium carbonate, zinc oxide, magnesium oxide, calcium oxide and/or silicon dioxide, talc, mica or wollastonite,
        0.01 to 5 parts by weight, preferably
        0.1 to 3 parts by weight,
of at least one stabilizer, antioxidant and/or ultraviolet absorber,
        0.01 to 5 parts by weight, preferably
        0.1 to 3 parts by weight,
of at least one dye and/or pigment,
        0 to 3 parts by weight, preferably
        0.01 to 2 parts by weight,
of at least one lubricant and/or anti-static agent,
        0 to 30 parts by weight, preferably

1 to 20 parts by weight,
of at least one flame-retardant agent,
0 to 12 parts by weight, preferably
0.1 to 10 parts by weight,
of at least one chemical and/or physical expanding agent.

9. Plastic film according to one or more of claims 1 to 8, characterised in that the polyolefin (b) comprising reactive groups consists of or comprises a blend or alloy and/or a copolymer or graft polymer of an olefin, preferably ethylene and/or propylene, and a carboxylic acid comprising at least one unsaturated bond and/or the anhydride thereof, preferably acrylic acid, methacrylic acid, maleic acid and/or maleic anhydride and/or an olefin or polyolefin, preferably ethylene or polyethylene, and a compound comprising at least one epoxy group, preferably glycidyl methacrylate, or a copolymer of one or more of these compounds.

10. Plastic film according to one or more of claims 1 to 9, characterised in that the elastic polymer(s), which .....consist of at least one ethylene propylene copolymer (EPM) comprising reactive groups, one ethylene propylene diene copolymer (EPDM) comprising reactive groups or modified by reaction, di-block polymers of styrene with butadiene, with isoprene, with ethylene butylene or with ethylene propylene and comprising reactive groups, preferably of styrene-tri-block polymers with ethylene butylene and ethylene propylene and comprising reactive groups.

11. Plastic film according to one or more of claims 1 to 10, characterised in that, in the thermal deformation range of 10 to 80° C above the melting point of the polyolefin comprising reactive groups or of the polyolefin-containing basic polymer of the ionomer, the plastic film, plastic film web or plastic layer produced from the constituents a) and b) or a), b) and d) and, if applicable, processing aids and additives has a resilience which is more than 1.5 times greater or a greater resistance to deformation than the polyolefin comprising reactive groups or the polyolefin-containing basic polymer of the ionomer, this resilience being reduced by no more than a factor of 10, preferably by no more than a factor of 4 within this deformation range.

12. Plastic film according to one or more of claims 1 to 11, characterised in that the plastic film or plastic film web is at least two-layered, consisting of a base layer or base film of a layer or film thickness of
40 $\mu$m to 3,000 $\mu$m, preferably
100 $\mu$m to 1,600 $\mu$m,
comprising or consisting of the plastic constituents a) and b) or a), b) and d) and preferably processing aids and additives, and at least one surface layer or surface film which is arranged directly or via at least one intermediate layer or intermediate film over the base layer or base film and has a layer or film thickness of
1 $\mu$m to 120 $\mu$m, preferably
2 $\mu$m to 80 $\mu$m.

13. Plastic film according to one or more of claims 1 to 12, characterised in that the plastic film or plastic film web consists of at least two base layers or base films, comprising or consisting of the plastic constituents and/or plastic blends a) and b) or a), b) and d) in equal, although preferably different mixture ratios and/or equal or different molecular weights of the polymers or elastomers used in the individual base layers or base films, that each base layer or base film is of a thickness of
40 to 2,500 $\mu$m, preferably
100 to 1,500 $\mu$m,
and the two- or multi-layer base films are preferably additionally coated with or joined to a surface layer or surface film having a different chemical composition and/or have an adhesive or joining layer or film or underlayer or underfilm of different chemical compositions.

14. Plastic film according to one or more of claims 1 to 13, characterised in that the plastic film or plastic film web, preferably at least one base layer or base film and/or a surface layer or top film is embossed or grained.

15. Plastic film according to one or more of claims 1 to 14, characterised in that the surface layer comprises or consists of an acrylate resin or a polyurethane resin and/or a vinyl chloride copolymer, preferably applied in the form of a coating containing a solvent.

16. Plastic film according to one or more of claims 1 to 15, characterised in that the elastic polymer comprising reactive groups or thermoplastic elastomer comprising reactive groups and/or elastomer-containing polymer and/or polymer bend (a) has a 2% E-modulus which is lower, preferably lower by more than 10 N/mm² (measured at 20°C), than that of the polyolefin and/or olefinic ionomer comprising reactive groups.

17. Method for producing the plastic film according to one or more of claims 1 to 16, characterised in that the plastic blend for the plastic film is mixed or homogenized in a plasticizing device, formed into a plastic film web or plastic film in an extrusion, a coextrusion or calendering process or film casting process at temperatures between
      150 and 280°C, preferably
      160 and 250°C,
and subsequently cooled.

18. Method for producing the plastic film according to one or more of claims 1 to 17, characterised in that the plastic film or plastic film web is formed under heat, embossed, grained and/or structured at temperatures of
      130 to 280°C, preferably
      150 to 250°C.

19. Method for producing the plastic film according to one or more of claims 1 to 18, characterised in that, when in the molten state or after being heated to temperatures exceeding 160°C following tempering on one or both sides, preferably cooling, the plastic film or plastic film web is sucked or pressed directly into a die with a smooth, grained or structured surface and preferably formed in a positive or negative deep-drawing process, with the film or molten surface which faces the negative deep-drawing die preferably having a higher temperature than the back surfaces or, when using positive deep-drawing, the surface which faces the positive deep-drawing die having a lower temperature than the back surface, and the plastic films being formed into moulded parts, articles or hollow bodies in these thermoforming processes.

20. Use of the plastic film or plastic film web according to one or more of claims 1 to 16 for producing flexible moulded parts, panelling parts, decorative films, motor vehicle films, motor vehicle panelling and interior motor vehicle parts.

21. Use of the plastic film or plastic film web according to one or more of claims 1 to 16 for processing in a negative deep-drawing process.

22. Use of the plastic film or plastic film web according to one or more of claims 1 to 16 with the simultaneous use of at least one expanding agent or expanding agent blend for at least one base layer, characterised in that the laminated film web consists of at least two base layers or base films or comprises these base layers, at least one layer of which, preferably the lower base layer or base film, has a foam layer or foam structure, and the laminated film web is used for interior panelling, mats, floor coverings, for producing moulded parts or mouldings, interior panelling for motor vehicles or motor vehicle parts and for producing mouldings, hollow bodies or moulded parts.

**Revendications**

1. Feuille de matière plastique ou bande de feuille de matière plastique monocouche ou multicouche contenant une polyoléfine ou un mélange de polyoléfines avec des groupes réactifs ainsi qu'éventuellement des adjuvants de mise en oeuvre et des additifs dans au moins une couche, caractérisée en ce que la feuille de matière plastique ou la bande de feuille de matière plastique contient ou est constituée d'au moins une couche ou une feuille qui, à titre de polyoléfines ou de mélanges de polyoléfines comprenant des groupes réactifs, contient ou est constituée de :
      (a) 5 à 80 parties en poids
      d'au moins un polymère élastique ou élastomère thermoplastique contenant des groupes réactifs constitué d'au moins un copolymère d'éthylène et de propylène (EPM) contenant des groupes

18

carboxyle, anhydride et/ou époxy comme groupes réactifs, d'au moins un copolymère d'éthylène, de propylène et de diène (EPDM) contenant des groupes réactifs ou modifié de manière à être réactif, des polymères diblocs du styrène contenant des groupes réactifs avec du butadiène, avec de l'isoprène, avec de l'éthylène-butylène ou de l'éthylène-propylène, de préférence de polymères triblocs du styrène avec de l'éthylène-butylène et de l'éthylène-propylène contenant des groupes réactifs, et

b) 95 à 20 parties en poids

d'au moins une polyoléfine ou ionomère contenant des polyoléfines, contenant des groupes réactifs, de préférence d'au moins un copolymère, terpolymère et/ou polymère greffé d'oléfines contenant des groupes réactifs et/ou d'au moins un ionomère contenant ou à base d'un homopolymère, d'un copolymère, d'un terpolymère et/ou d'un polymère greffé d'oléfines; les groupes réactifs étant des groupes carboxyle, hydroxyle, anhydride et/ou époxy et la fraction pondérale des groupes réactifs étant

de 0,2 à 30 % en poids

sur base du ou des polymères élastiques contenant des groupes réactifs (calculé sur 100 parties en poids) ou du ou des élastomères thermoplastiques contenant des groupes réactifs ou encore des mélanges de polyoléfines selon a) et/ou de

0,2 à 30 % en poids

sur base de la ou des polyoléfines ou des ionomères contenant des polyoléfines contenant elles-mêmes des groupes réactifs (selon b), le module d'élasticité à 2 % du mélange de a) et b) ou le module d'élasticité à 2 % de la feuille de matière plastique ou de la bande de feuille de matière plastique thermoformée à partir du mélange ou de la couche (dans le cas de feuilles de matière plastique multicouches) se situant entre 50 et 600 N/mm$^2$.

2. Feuille de matière plastique selon la revendication 1, caractérisée en ce que la feuille de matière plastique ou la bande de feuille de matière plastique contient comme mélange polymère avec des groupes réactifs :

10 à 60 parties en poids de a)

et

90 à 40 parties en poids de b)

ou en est constitué, la fraction pondérale en groupes réactifs étant de

0,3 à 25 % en poids

sur base du ou des polymères élastiques contenant des groupes réactifs (calculé sur base de 100 parties en poids) ou du ou des élastomères thermoplastiques ou des mélanges de polymères contenant des groupes réactifs selon a) et/ou :

0,3 à 25 % en poids,

sur base de la ou des polyoléfines ou du ou des ionomères polyoléfiniques contenant des groupes réactifs selon b), le module d'élasticité à 2 % du mélange de a) et de b) ou le module d'élasticité à 2 % de la feuille de matière plastique ou de la bande de feuille de matière plastique thermoformée à partir de ces substances ou encore de la couche (en cas de feuilles de matière plastique multicouches) se situant entre 70 et 550 N/mm$^2$.

3. Feuille de matière plastique selon l'une ou plusieurs des revendications 1 et 2, caractérisée en ce que, dans la feuille de matière plastique, le ou les polymères élastiques et/ou le ou les élastomères thermoplastiques contenant des groupes réactifs sont liés à la polyoléfine réactive par des liaisons covalentes et/ou des liaisons ioniques.

4. Feuille de matière plastique selon l'une ou plusieurs des revendications 1 à 3, caractérisée en ce que le polymère élastique et/ou les élastomères thermoplastiques contenant des groupes réactifs sont constitués de mélanges de divers polymères réactifs et non réactifs, la teneur totale en groupes réactifs des mélanges étant cependant de

0,2 à 30 % en poids, de préférence

0,3 à 25 % en poids

(sur base de 100 % en poids du mélange élastique de polymères contenant des groupes réactifs).

5. Feuille de matière plastique selon une ou plusieurs des revendications 1 à 4, caractérisée en ce que le polymère élastique contenant des groupes réactifs ou l'élastomère thermoplastique contenant des groupes réactifs et/ou les polymères ou le mélange de polymères contenant un élastomère présente (a)

EP 0 413 912 B1

un module d'élasticité à 2 % différent vis-à-vis de (b), de préférence un module d'élasticité à 2 % qui diffère de plus de 10 N/mm$^2$ (mesuré à 20°C) vis-à-vis de la polyoléfine et ou de l'ionomère oléfinique contenant des groupes réactifs.

6. Feuille de matière plastique selon l'une ou plusieurs des revendications 1 à 5, caractérisée en ce que le mélange de matière plastique constitué de (a) et de (b) contient, par 100 parties en poids :
   d) 0,5 à 30 parties en poids, de préférence
      5 à 25 parties en poids,
   d'une matière thermoplastique, à l'exception cependant d'une polyoléfine ou d'un ionomère polyoléfinique ou d'élastomères thermoplastiques ou de polymères élastiques contenant des groupes réactifs libres.

7. Feuille de matière plastique selon l'une ou plusieurs des revendications 1 à 6, caractérisée en ce que, par 100 parties en poids de a) et de b) ou de a), b) et d), la feuille de matière plastique ou la bande de feuille de matière plastique contient en outre 0,01 à 6 parties en poids d'au moins un adjuvant de mise en oeuvre ou additif, de préférence d'au moins un stabilisant, antioxydant, absorbeur d'UV, agent de moulage et/ou agent antistatique dans une couche, ou bien en ce que la feuille de matière plastique ou la bande de feuille de matière plastique en est constituée.

8. Feuille de matière plastique selon l'une ou plusieurs des revendications 1 à 7, caractérisée en ce que la composition de matière plastique utilisée pour le moulage de la monofeuille de matière plastique ou de la monobande de feuille de matière plastique, ou au moins une couche de la feuille de matière plastique ou de la bande de feuille de matière plastique contient :
   a) 5 à 80 parties en poids, de préférence
      10 à 60 parties en poids
   d'au moins un polymère élastique contenant des groupes réactifs et/ou d'au moins un élastomère thermoplastique contenant des groupes réactifs ou encore d'un polymère ou d'un mélange de polymères contenant des groupes réactifs, comportant une fraction de polymères élastiques de
      plus de 60 % en poids, de préférence
      plus de 75 % en poids
   (sur base de 100 parties en poids du polymère ou mélange de polymères contenant un élastomère),
   b) 95 à 20 parties en poids, de préférence
      90 à 40 parties en poids
   d'au moins une polyoléfine ou ionomère polyoléfinique contenant des groupes réactifs, de préférence d'au moins un copolymère, terpolymère et/ou polymère greffé d'oléfine contenant des groupes réactifs et/ou d'au moins un ionomère contenant ou à base d'un copolymère, terpolymère et/ou polymère greffé de polyoléfine,
   et/ou a), b) et d)
      0,5 à 30 parties en poids, de préférence
      5 à 25 parties en poids
   d'une matière thermoplastique (à l'exception cependant d'une polyoléfine et d'un ionomère polyoléfinique ou d'élastomères thermoplastiques ou de polymères élastiques contenant des groupes réactifs libres) comme fraction de matière plastique, le polymère élastique, l'élastomère et/ou le polymère contenant un élastomère ou le mélange de polymères (a) présentant un module d'élasticité à 2 % différent, de préférence un module d'élasticité à 2 % différent ou inférieur de plus de 10 N/mm$^2$ (mesuré à 20°C) à celui de la polyoléfine et/ou de l'ionomère oléfinique contenant des groupes réactifs et, par rapport à 100 parties en poids de a) et de b) ou de a), de b) et de d), la feuille de matière plastique, la bande de matière plastique ou la couche de la feuille de matière plastique multicouche ou la bande de feuille de matière plastique multicouche contenant en outre
      0,01 à 30 parties en poids, de préférence
      0,1 à 20 parties en poids
   d'au moins une charge choisie dans le groupe des oxydes métalliques, des carbonates métalliques, des dioxydes métalliques, des hydrates métalliques, des hydroxydes métalliques, de l'hydrotalcite et/ou des silicates et/ou d'une charge organique choisie dans le groupe de la cellulose finement divisée, de l'amidon et/ou du carbone finement divisé, de préférence, cependant, du carbonate de calcium, de l'oxyde de zinc, de l'oxyde de magnésium, de l'oxyde de calcium et/ou du dioxyde de silicium, du talc, du mica ou de la wollastonite,
      0,01 à 5 parties en poids, de préférence

20

0,1 à 3 parties en poids

d'au moins un stabilisant, antioxydant et/ou absorbeur d'UV,

0,01 à 5 parties en poids, de préférence

0,1 à 3 parties en poids

d'au moins un colorant et/ou pigment coloré,

0 à 3 parties en poids, de préférence

0,01 à 2 parties en poids, d'au moins un agent de lubrification et/ou d'un agent antistatique,

0 à 30 parties en poids, de préférence

1 à 20 parties en poids

d'au moins un agent antiflamme,

0 à 12 parties en poids, de préférence

0,1 à 10 parties en poids

d'au moins d'au moins un agent gonflant chimique et/ou physique.

9. Feuille de matière plastique selon l'une ou plusieurs des revendications 1 à 8, caractérisée en ce que la polyoléfine (b) contenant des groupes réactifs est constituée de, ou contient, un mélange ou alliage et/ou un copolymère ou polymère greffé d'une oléfine, de préférence de l'éthylène et/ou du propylène, et un acide carboxylique contenant au moins une liaison insaturée et/ou son anhydride, de préférence l'acide acrylique, l'acide méthacrylique, l'acide maléique et/ou l'anhydride maléique; et/ou une oléfine ou polyoléfine, de préférence de l'éthylène ou du polyéthylène et un composé contenant au moins un groupe époxy, de préférence du méthacrylate de glycidyle; ou un copolymère d'un ou plusieurs de ces composés.

10. Feuille de matière plastique selon l'une ou plusieurs des revendications 1 à 9, caractérisée en ce que le ou les polymères élastiques, qui comportent des composés contenant des groupes réactifs ou des groupes réactifs supplémentaires, sont constitués d'un copolymère d'éthylène et de propylène contenant au moins un groupe réactif (EPM), d'un copolymère d'éthylène, de propylène et de diène (EPDM) contenant des groupes réactifs ou modifié de manière réactive, des polymères diblocs contenant des groupes réactifs formés à partir de styrène avec du butadiène, de l'isoprène, de l'éthylène-butylène ou de l'éthylène-propylène, de préférence à partir de polymères triblocs du styrène contenant des groupes réactifs avec de l'éthylène-butylène et de l'éthylène-propylène.

11. Feuille de matière plastique selon l'une ou plusieurs des revendications 1 à 10, caractérisée en ce que la feuille de matière plastique, la bande de feuille de matière plastique ou la couche de matière plastique préparée à partir des composants a) et b) ou a), b) et c), ainsi qu'éventuellement avec des adjuvants de mise en oeuvre et des additifs, présente dans la plage de déformation thermique de 10 à 80°C au-dessus du point de fusion de la polyoléfine contenant des groupes réactifs ou du polymère polyoléfinique de base de l'ionomère, une tension de déformation ou une résistance à la déformation de plus de 1,5 fois supérieure à celle de la polyoléfine contenant des groupes réactifs ou du polymère polyoléfinique de base de l'ionomère, cette tension étant réduite d'un facteur non supérieur à 10, de préférence d'un facteur non supérieur à 4, dans ce domaine.

12. Feuille de matière plastique selon l'une ou plusieurs des revendications 1 à 11, caractérisée en ce que la feuille de matière plastique ou la bande de feuille de matière plastique est au moins bicouche et est constituée d'une couche de base ou d'une feuille de base d'une épaisseur de

40 $\mu$m à 3.000 $\mu$m, de préférence

de 100 $\mu$m à 1.600 $\mu$m,

contenant ou constituée des composants de matière plastique a) et b) ou a), b) et d) et de préférence d'adjuvants de mise en oeuvre et d'additifs, et d'au moins une couche superficielle ou feuille superficielle, qui est appliquée, directement ou sur au moins une couche intermédiaire ou feuille intermédiaire, sur la couche de base ou la feuille de base, et qui présente une épaisseur de couche ou de feuille de

1 $\mu$m à 120 $\mu$m, de préférence

2 $\mu$m à 80 $\mu$m.

13. Feuille de matière plastique selon l'une ou plusieurs des revendications 1 à 12, caractérisée en ce que la feuille de matière plastique ou la bande de feuille de matière plastique est constituée d'au moins deux couches de base ou feuilles de base contenant ou constituées des composants de matière

EP 0 413 912 B1

plastique et/ou des mélanges de matière plastique a) et b) ou a), b) et d) en rapports de mélange égaux, mais de préférence différents, et/ou en poids moléculaires égaux ou différents des polymères ou des élastomères utilisés dans les couches de base ou les feuilles de base individuelles, chacune des couches de base ou des feuilles de base ayant une épaisseur de

40 $\mu$m à 2.500 $\mu$m, de préférence
100 $\mu$m à 1.500 $\mu$m,

et les feuilles de base à double ou multiples couches sont de préférence, en plus, recouvertes de ou liées à une couche ou une feuille superficielle présentant une composition chimique différente, et/ou comportent une couche d'adhésion, une couche de liaison ou une couche inférieure ou feuille inférieure de composition chimique différente.

14. Feuille de matière plastique selon l'une ou plusieurs des revendications 1 à 13, caractérisée en ce que la feuille de matière plastique ou la bande de feuille de matière plastique, de préférence au moins une couche de base ou une feuille de base et/ou une couche superficielle ou une feuille superficielle, présente un gaufrage ou une structure grainée.

15. Feuille de matière plastique selon l'une ou plusieurs des revendications 1 à 14, caractérisée en ce que la couche superficielle contient ou est constituée d'une résine d'acrylate ou d'une résine de polyuréthane et/ou d'un copolymère du chlorure de vinyle, qui sont appliqués de préférence sous la forme d'un revêtement contenant un solvant.

16. Feuille de matière plastique selon l'une ou plusieurs des revendications 1 à 15, caractérisée en ce que le polymère élastique contenant des groupes réactifs ou l'élastomère thermoplastique et/ou le polymère à base d'élastomère ou le mélange de polymères (a) contenant des groupes réactifs présente un module d'élasticité à 2 % inférieur, de préférence un module d'élasticité à 2 % (mesuré à 20°C) inférieur de plus de 10 N/mm$^2$, à celui de la polyoléfine contenant des groupes réactifs et/ou de l'ionomère oléfinique.

17. Procédé de fabrication de la feuille de matière plastique selon l'une ou plusieurs des revendications 1 à 16, caractérisé en ce que le mélange de matières plastiques destiné à la feuille de matière plastique est mélangé ou homogénéisé à des températures comprises entre

150 et 280°C, de préférence
160 à 250°C,

dans un dispositif de plastification et mis en forme par un procédé d'extrusion, de co-extrusion ou de calandrage ou encore par un procédé de coulage en feuille, de manière à obtenir une bande de feuille de matière plastique ou une feuille de matière plastique, et est ensuite refroidi.

18. Procédé de fabrication de la feuille de matière plastique selon l'une ou plusieurs des revendications 1 à 17, caractérisé en ce que la feuille de matière plastique ou la bande de feuille de matière plastique est thermoformée, gaufrée, grainée et/ou texturée à des températures de

130 à 280°C, de préférence
150 à 250°C.

19. Procédé de fabrication de la feuille de matière plastique selon l'une ou plusieurs des revendications 1 à 18, caractérisé en ce que la feuille de matière plastique ou la bande de feuille de matière plastique, à l'état de fusion ou après chauffage à des températures de plus de 160°C, et après équilibrage des températures sur l'une et/ou l'autre face, de préférence par refroidissement, est aspirée ou pressée directement dans un moule à la surface de moulage lisse, grainée ou texturée, et est de préférence moulée selon un procédé d'emboutissage profond positif ou négatif, la surface de la feuille ou de la masse fondue tournée vers le moule d'emboutissage profond négatif présentant de préférence une température supérieure à celle des surfaces du verso ou, dans le cas du procédé d'emboutissage profond positif, la surface tournée vers le moule d'emboutissage profond positif présentant une température moindre que la surface opposée, les feuilles de matière plastique étant transformées par ces procédés de thermoformage en pièces moulées, en objets ou en corps creux.

20. Utilisation de la feuille de matière plastique ou de la bande de feuille de matière plastique selon l'une ou plusieurs des revendications 1 à 16, pour fabriquer des pièces moulées, pièces de garnissage, feuilles décoratives, feuilles pour usage dans l'industrie automobile, garnissages de véhicules automo-

22

biles et parties intérieures de véhicules automobiles, flexibles.

21. Utilisation de la feuille de matière plastique ou de la bande de feuille de matière plastique selon l'une ou plusieurs des revendications 1 à 16 pour mise en oeuvre dans le procédé d'emboutissage profond négatif.

22. Utilisation de la feuille de matière plastique ou de la bande de feuille de matière plastique selon l'une ou plusieurs des revendications 1 à 16, avec l'emploi conjoint d'au moins un agent gonflant ou d'un mélange d'agents gonflants pour au moins une couche de base, caractérisée en ce que la bande de feuille composite contient ou est constituée d'au moins deux couches de base ou feuilles de base, dont au moins une couche, de préférence la couche de base ou feuille de base inférieure, présente une couche expansée ou une structure cellulaire, et en ce que la bande de feuille composite est destinée à la fabrication de garnissages intérieurs, de mats, de revêtements de planchers, à la fabrication de pièces moulées ou de corps moulés, de garnissages internes de véhicules automobiles et de pièces de véhicules automobiles ainsi qu'à la fabrication de corps creux, d'objets, de corps moulés ou de pièces moulées.